# EUROPEAN PATENT SPECIFICATION

(11) **EP 3 176 441 B1**
(45) Date of publication and mention of the grant of the patent: **15.09.2021**
(21) Application number: 15197535.6
(22) Date of filing: 02.12.2015
(51) Int. Cl.: F04D 29/42, F04D 1/04, F04D 29/02, F04D 1/06

(54) **MULTISTAGE PUMP**
MEHRSTUFIGE PUMPE
POMPE À PLUSIEURS ÉTAGES

(43) Date of publication of application: 07.06.2017
(73) Proprietor: Grundfos Holding A/S, 8850 Bjerringbro (DK)
(72) Inventor: Mikkelsen, Steen, 8850 Bjerringbro (DK)
(74) Representative: Patentanwälte Vollmann Hemmer Lindfeld Partnerschaft mbB

(56) References cited:
- CN-A- 103 807 179
- US-A- 5 030 061
- US-A- 5 385 444
- US-A- 5 961 301

## Description

The invention relates to a multistage pump according to the preamble of claim 1.

Multistage rotary pumps known in prior art basically comprise a base element, a pump body, and a head element as main elements. The base element is provided with an inlet port equipped with a suction connecting piece through which a fluid enters the pump, and an outlet port equipped with a pressure connecting piece through which the fluid, after having been passed through a plurality of pump stages arranged one above or adjacent to the other in the pump body, is discharged from the pump again.

In prior art like CN 103807179 A, the base element of such multistage pumps usually is made from cast iron in order to provide sufficient rigidity and stability to the pump. However, the use of cast iron for the base element, on the one hand, imparts a certain weight to the pump and, on the other hand, also renders the pump expensive due to high material costs.

In order to provide a less expensive and light-weight pump, solutions are known from prior art like US 5,030,061 A1 which discloses a multistage pump according to the preamble of claim 1, using sheet metal for the base element instead of cast iron. However, when replacing cast iron by sheet metal in the base element, the pump inevitably will suffer from stability problems.

Therefore, it is an object of the present invention to provide a light-weight multistage pump with sufficient stability and robustness.

This problem is solved by a multistage pump having the features according to claim 1. Preferred embodiments of the invention are defined in the dependent claims, the following description and the drawings.

According to the invention, a multistage pump is provided, comprising a pump body, at a lower end of which a base element is arranged, and at an upper end of which a head element is arranged, at least the base element being made from sheet steel and having an inlet port and an outlet port, wherein the inlet port and the outlet port are mechanically connected to each other by an elongate carrier running through the base element. This elongate carrier is a pipe with efficient strength and which is mechanically connected for example by welding. This carrier enforces stability of the base element especially in the region of the inlet port and the outlet port where pipes are connected and where mechanical forces may be high. The main idea of this invention is to use an elongate carrier in form of a pipe running across the base element which on the one hand gives high stability to the base element and on the other hand to the inlet port and the outlet port. The pipe gives high stability in all directions across this pipe. The main advantage to use a pipe as an elongate carrier is that this is not only used to enforce stability of the base element but also to create the channels leading to the inlet and the outlet ports.

By this inventive configuration, a light-weight pump can be provided which nevertheless has sufficient stability and robustness due to the mechanical connection of the inlet port and outlet port within the base element. This pipe running through the base element and connecting the inlet port and the outlet port gives a high stability of the base element and can be used as channels from the inlet port and to the outlet port. Moreover, the multistage pump according to the present invention can be produced at low costs compared to pumps comprising a cast iron base element.

According to a preferred embodiment of the invention, a suction connecting piece is fitted at a first end of the pipe located at the inlet port, and a pressure connecting piece is fitted at a second end of the pipe located at the outlet port. This makes it easy to construct inlet port and the outlet port. As these connecting pieces are fitted at the ends of the pipe it is easy to equip the multistage pump with different sorts of connecting pieces as they are used in different countries. Moreover, a good sealing effect can be achieved by welding the connecting pieces respectively to the pipe.

According to a further preferred embodiment, the base element comprises a base cup which forms a cylindrical outer circumferential wall of the base element. Such a base cup can be produced by metal forming from a sheet metal plate and gives high stability especially in combination with the pipe running through this base cup.

Further, the pipe may be connected fixedly, in particular, by welding, to the base element, in particular, to the base cup, thereby further enhancing the mechanical strength of the base element and thus, the entire multistage pump. This material connection provides for further improvements as to stability and mechanical strength of the pump.

According to still a further preferred embodiment, the pump further comprises an inner pipe for separating fluid entering the pump at the inlet port having a first pressure and fluid being discharged from the pump at the outlet port having a second pressure, the inner pipe comprising a number of stackable pipe elements. The inner pipe also serves for accommodating or enclosing the pump stack comprising a plurality of pump stages arranged one above the other, wherein it is especially preferred, if each element of the inner pipe respectively surrounds one pump stage. The stackable inner pipe elements preferably are also connected to each other fixedly.

It also is preferable, if the inlet port and the outlet port are arranged at opposing sides at the circumference of the base element.

Moreover, the pipe connecting the inlet port and the outlet port may be a straight pipe. Preferably this pipe has a circular cross section. This design of the pipe is simple and thus, may be produced at low costs. It guarantees high stability.

According to a further preferred embodiment, at least one first hole is formed in the pipe for providing a passage for the fluid entering the pump through the inlet port to the pump body, in particular, so as to pass through a plurality of pump stages arranged within the pump body.

Also, at least one second hole may be formed in the pipe adjacent to the outlet port for providing a passage from the inner pipe to the outlet port for the fluid which has passed through the at least one pump stage. With respect to the at least one first hole and at least one second hole it is noted that with respect to the pump efficiency, it is preferable to respectively only provide one first and several second holes in order to minimize turbulences in the fluid entering and leaving the base element.

A disc-shaped member having substantially the same diameter as the inner diameter of the pipe may be arranged within the pipe, so as to seal the fluid entering the pump through the inlet port from the fluid being discharged from the pump through the outlet port. This disc-shaped member can be also produced from sheet metal and welded to the pipe.

Preferably, the disc-shaped member is arranged between the first hole and the at least one second hole of the pipe. The provision of the disc-shaped member between the first and second holes of the pipe serves for sealing the high pressure fluid flow from the low pressure fluid flow in the pipe between the inlet and outlet ports.

According to a further preferred embodiment, the pipe runs through a suction chamber, in particular, through its center, formed within the base element. This configuration offers further stability enhancements.

Moreover, it is advantageous, if the pipe runs through an annular space formed between the inner pipe and the base cup. Preferably the pipe running through the base element is fixed to the inner pipe by expanding and to the base cup by welding.

Preferably, the base cup is connected at its upper end to a cylindrical sleeve of the pump body, which is also formed from sheet metal. Between this cylindrical sleeve and the inner pipe there is formed a ring channel which feeds back the fluid from the last pump stage to the outlet port. For entering the fluid from this ring channel into the elongate pipe across the base element there are preferably formed several holes along the circumference of the pipe.

Further details and features of the invention as well as concrete embodiments of the invention can be derived from the following description in connection with the drawing, in which:
- Fig. 1: shows a multistage pump according to a preferred embodiment of the invention, whereby the lower half of the pump is shown in sectional view and the upper half in regular side view;
- Fig. 2: shows a detail of a lower portion of the multistage pump of Fig. 1 in a cut open perspective view;
- Fig. 3: shows an exploded view of a pipe and connecting pieces for a pump according to an embodiment of the invention;
- Fig. 4: shows a base element including a pipe and connecting pieces for a pump according to an embodiment of the invention;
- Fig. 5: shows a perspective view of the base element, partially cut open; and
- Fig. 6A, Fig. 6B: respectively show perspective views of the pipe of the multistage pump shown in Fig. 1

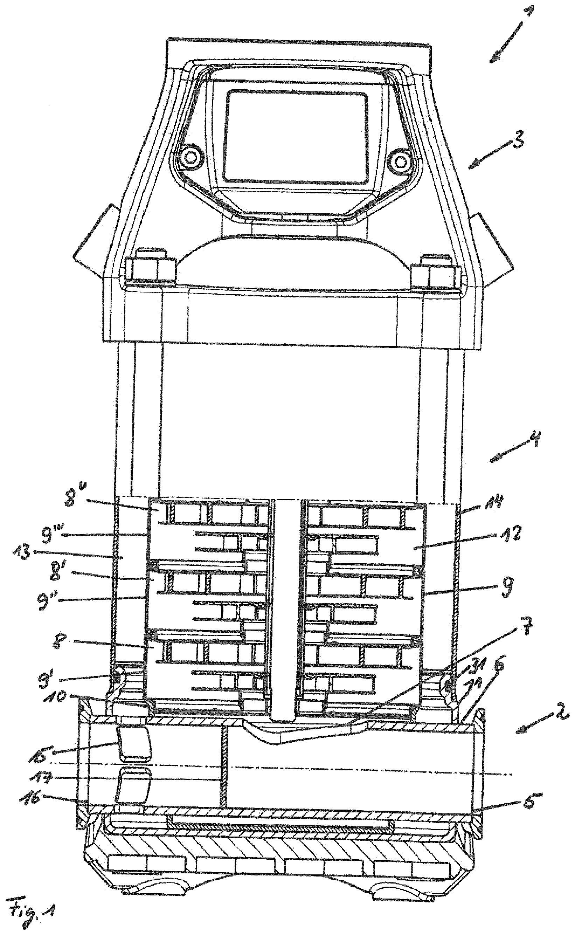

Fig. 1 shows a multistage pump 1 according to a preferred embodiment of the invention, whereby the lower half of the pump 1 is shown in sectional view and the upper half in regular side view. As can be seen, basically the pump 1 can be subdivided in three sections, namely, the lowermost part of the pump 1 is formed by the base element 2, the uppermost part of the pump 1 is formed by a head element 3, and inbetween the base element 2 and the head element 3, there is arranged a pump body 4. When the pump 1 is activated, fluid, or in particular, water, enters the pump 1 through an inlet port 5 in the base element 2, then passes through a pipe 6 so as to enter through a first hole 7 of the pipe 6 the pump body 4 in which a plurality of pump stages 8, 8', 8", etc. are provided, each having an impeller and an diffuser.

In the pump body 4, the fluid is passed on from stage to stage upwards within a first annular space 12 surrounded by an inner pipe 9 which consists of a plurality of stackable pipe elements 9', 9'', 9''', etc., whereby basically each one of the pump stages 8, 8', 8", etc. is surrounded by one of the stackable pipe elements 9', 9'', 9''', etc. The stackable inner pipe 9 rests on an inner cup member 10 of the base element 2, which in turn is surrounded by an outer base cup 11 of the base element 2. The fluid, after having been passed through the pump stages 8, 8', 8", etc. in the pump body 4, then reaches the head element 3 of the pump 1 then flows back, e.g., through holes of a bearing ring not shown here, into a second annular space 13 which is formed between a jacket or outer sleeve 14 of the pump body 4 and the inner pipe 9. The outer sleeve 14 is sealingly connected, in particular by means of an O-ring 31, to the outer base cup 11 of the base element 2. When the fluid having passed through the second annular space 13 downwards reaches the base element 2 again, it will be discharged from the pump 2 by first passing through a second hole 15 or a plurality of second holes 15, provided in the circumference of the pipe 6 into the pipe 6 and from there, the fluid leaves the pump 1 again through the outlet port 16 of base element 2.

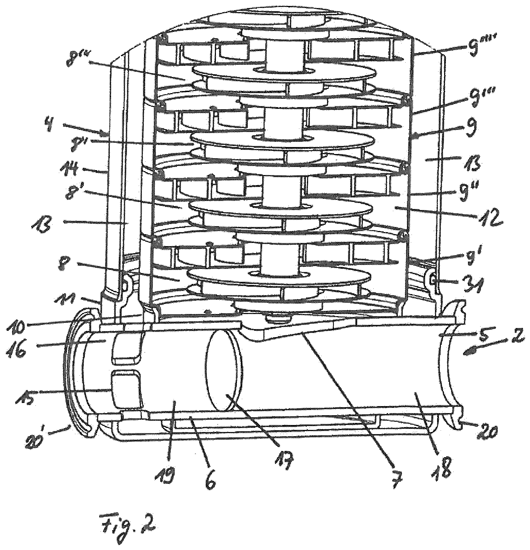

Fig. 2 shows a detail of a lower portion of the multistage pump 1 of Fig. 1 in a cut open perspective view. Here, the arrangement of a number of pump stages 8, 8', 8'', 8''', etc. can be seen which are arranged one on top of the other, and each of which is surrounded by a respective element 9', 9'', 9''', 9'''', etc. of the stackable inner pipe 9. The elements 9', 9", 9''', 9'''', etc. are connected to each other and together form the inner pipe 9. The lowermost member of the stackable inner pipe 9 rests on and is connected to the inner cup member 10 of the base element 2. The outer jacket of the pump 1 in its middle and lower sections is formed by the outer sleeve 14 encasing the pump body 4 with the plurality of pump stages 8, 8', 8", 8''', etc., and the outer base cup 11 of the base element 4.

Further, as already mentioned above, the base element 2 has an inlet port 5 and an outlet port 16 arranged at the opposing side at the circumference of the base cup 11. The inlet port 5 and the outlet port 16 are mechanically connected to each other by the pipe 6 which passes through the annular space 30 formed between the outer base cup 11 and the inner cup member 10 as well as through the interior space of inner cup member 10 itself, forming a suction chamber of the base element 1. Within the pipe 6, there is arranged a disk-shaped member 17 which basically has the same or a just slightly smaller diameter as the inner diameter of the pipe 6 so as to seal a low pressure section 18 on the inlet side of the pipe 6 from a high pressure section 19 at the outlet side of the pipe 6. Further, both ends of the pipe 6 are provided with respective connecting pieces 20, 20' for connecting the pump 1 to respective external inflow and outflow pipes not shown here.

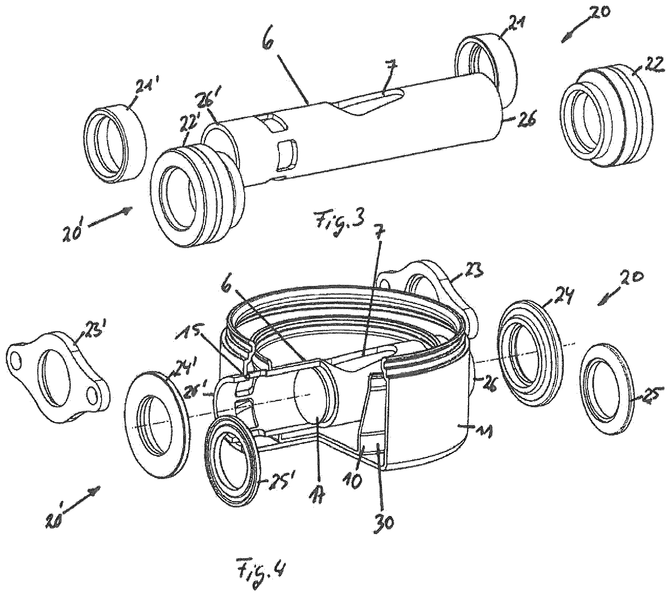

Fig. 3 shows the pipe 6 as well as the respective connecting pieces 20, 20' for a multistage pump 1 according to embodiments of the invention in an exploded view. Each one of the connecting pieces 20, 20' can be formed for example by a sleeve 21, 21' which is substantially cylindrical, or by a stepped sleeve 22, 22'. The connecting pieces 20, 20' to be fitted on the pipe 6 at the suction or inlet side and the pressure or outlet side of the pump 1 are identical and connected to the pipe by welding

Fig. 4 shows a base element 2 including the pipe 6 and connecting pieces 20, 20' for a pump 1 according further embodiments of the invention. As can be seen here, the connecting piece 20, 20' can consist of, a flange part 23, 23', a ring part 24, 24', or a ring part 25, 25' to be fixedly connected to the respective pipe end 26, 26', for example, by welding. Fig. 3 and 4 show different examples of connecting pieces 20, 20' which make clear that it is very easy to adapt this pump to any connecting system.

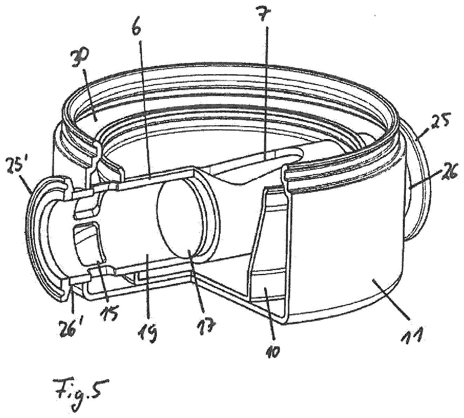

Fig. 5 shows a perspective view of the base element 2, partially cut open at the outlet end of the pipe 6 and base cup 11. As can be seen here, the ring part 25, 25' is fixedly connected to the pipe end 26' at the outlet or pressure side of the pump 1 by means of welding. Further, the pipe 6 is connected to the base cup 11 by welding and to the inner cup member 10 by expanding so that sufficient mechanical strength is provided for the base element 2 of the pump 1, since the components of the base element 2, namely, the base cup 11 and the inner cup member 10 are formed from sheet metal. Also, it can be seen that the disc-shaped member 17 is arranged within the pipe 6 between the first hole 7 on the inlet side or low pressure side, and the plurality of second holes 15 on the outlet side or high pressure side so as to sealingly separate the low pressure section 18 from a high pressure section 19.

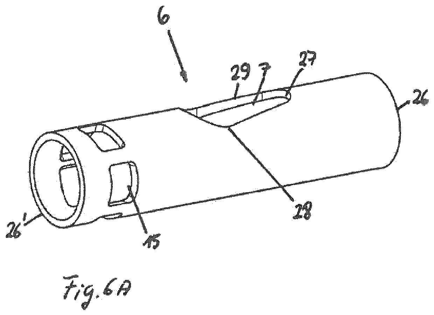

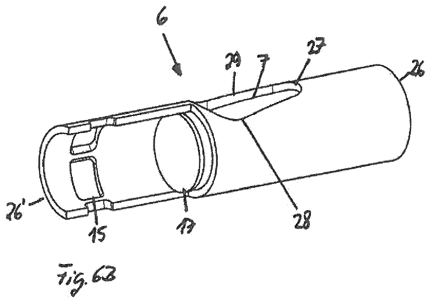

Fig. 6A and Fig. 6B respectively show perspective views of the pipe 6 of the multistage pump shown in Fig. 1, whereby Fig. 6B shows the outlet side of the pipe 6 or high pressure section 19 with the front part of the pipe 6 cut out so that the arrangement of the disc-shaped member 17 between the first hole 7 and the plurality of second holes 15 can be seen. Further, it can be seen that the first hole is arranged at an upper or top part of the pipe 6 which, when assembled in the base element 2 and to the pump 1 is directed towards the pump body 4 or the annular space 12 in which the pump stages 8, 8', 8", etc. are arranged. The first hole 7 has an elongated shape with rounded corners 27 and substantially V-shaped recesses 28 at at least one of the lateral edges 29 of the first hole 7. This hole 7 is part of the suction mouth of the first pumpstage. The second holes 15 are arranged symmetrically around the outer circumference of the pipe 6 at the outlet end and are substantially rectangular, whereby all second holes 15 are formed identically and spaced apart from each other at equal distances.

The multistage pump 1 being provided with the pipe 6 arranged within the outer base 11 of the base member 2 acts as a stiffening element and provides for sufficient strength when using sheet metal as material for the member of the base member 2.

### Reference numerals

- 1: multistage pump
- 2: base element
- 3: head element
- 4: pump body
- 5: inlet port
- 6: pipe
- 7: first hole
- 8, 8', 8'',: pump stages
- 9: inner pipe
- 9', 9'', 9''',: elements of inner pipe
- 10: inner cap member
- 11: outer base cup
- 12: first annular space
- 13: second annular space
- 14: outer sleeve
- 15: second holes
- 16: outlet port
- 17: disc-shaped member
- 18: low pressure section
- 19: high pressure section
- 20, 20': connecting pieces
- 21, 21': inner sleeve
- 22, 22': outer sleeve
- 23, 23': outer flange part
- 24, 24': intermediate ring part
- 25, 25': inner ring part
- 26, 26': pipe end
- 27: rounded corner
- 28: recess
- 29: lateral edge
- 30: third annular space
- 31: O-ring

## Claims

1. Multistage pump (1), comprising a body (4), at a lower end of which a base element (2) is arranged, and at an upper end of which a head element (3) is arranged, at least the base element (2) being made from sheet steel and having an inlet port (5) and an outlet port (16), which are mechanically connected to each other by an elongate carrier (6) running through the base element (2), **characterized in that** the elongate carrier is a pipe (6).

2. Multistage pump (1) according to claim 1, wherein a suction connecting piece (20) is fitted at a first end of the pipe (6) located at the inlet port (5), and a pressure connecting piece (20') is fitted at a second end of the pipe (6) located at the outlet port (16).

3. Multistage pump (1) according to any one of the claims 1 or 2, wherein the base element (2) comprises a base cup (11) which forms a cylindrical outer circumferential wall of the base element (2).

4. Multistage pump (1) according to claim 2 and optionally claim 3, wherein the suction connecting piece (20) and the pressure connecting piece (20') are respectively connected fixedly, in particular, by welding, to the pipe (6)).

5. Multistage pump (1) according to any one of claims 1 to 4, wherein the pipe (6) is connected fixedly, in particular, by expanding and/or welding, to the base element (2), in particular, to the base cup (11).

6. Multistage pump (1) according to any one of claims 1 to 5, further comprising an inner pipe (9) for separating fluid entering the pump (1) at the inlet port (5) having a first pressure and fluid being discharged from the pump (1) at the outlet port (16) having a second pressure, the inner pipe (9) comprising a number of stackable pipe elements (9', 9'', 9''', ...).

7. Multistage pump (1) according to any one of claims 1 to 6, wherein the inlet port (5) and the outlet port (16) are arranged at opposing sides at the circumference of the base element (2).

8. Multistage pump (1) according to any one of claims 1 to 7, wherein the pipe (6) connecting the inlet port (5) and the outlet port (16) is a straight pipe (6) with preferably circular cross section.

9. Multistage pump (1) according to any one of claims 1 to 8, wherein at least a first hole (7) is formed in the pipe (6) for providing a passage for the fluid entering the pump (1) through the inlet port (5) to the pump body (4), in particular, so as to pass through a plurality of pump stages (8, 8', 8'', 8''', ...) arranged within the pump body (4).

10. Multistage pump (1) according to claim 9, wherein at least one second hole (15) is formed in the pipe (6) adjacent to the outlet port (16) for providing a passage from the inner pipe (9) to the outlet port (16) for the fluid which has passed through the at least one pump stage (8, 8', 8'', 8''', ...).

11. Multistage pump (1) according to any one of claims 1 to 10, wherein a disc-shaped member (17) having substantially the same diameter as the inner diameter of the pipe (6) is arranged within the pipe (6), so as to seal the fluid entering the pump (1) through the inlet port (5) from the fluid being discharged from the pump (1) through the outlet port (16).

12. Multistage pump (1) according to claims 10 and 11 , wherein the disc-shaped member (17) is arranged between the first hole (7) and the at least one second hole (15) of the pipe (6).

13. Multistage pump (1) according to any one of claims 1 to 12, wherein the pipe (6) runs through a suction chamber, in particular, through its center, formed within the base element (2).

14. Multistage pump (1) according to claim 3 and optionally any one of claims 4 to 13, wherein the pipe (6) runs through an annular space (30) formed between the inner pipe (9) and the base cup (11).

15. Multistage pump (1) according to claim 3 and optionally any one of claims 4 to 13, wherein the base cup (11) is connected at its upper end to a cylindrical outer sleeve (14) of the pump body (4).

## Patentansprüche

1. Mehrstufige Pumpe (1), umfassend einen Körper (4), wobei an einem unteren Ende desselben ein Basiselement (2) angeordnet ist und an einem oberen Ende desselben ein Kopfelement (3) angeordnet ist, wobei zumindest das Basiselement (2) aus Stahlblech hergestellt ist und eine Einlassöffnung (5) und eine Auslassöffnung (16) aufweist, welche durch einen gestreckten Träger (6), der durch das Basiselement (2) verläuft, mechanisch miteinander verbunden sind, **dadurch gekennzeichnet, dass** der gestreckte Träger ein Rohr (6) ist.

2. Mehrstufige Pumpe (1) nach Anspruch 1, wobei ein Saugverbindungsstück (20) an ein erstes Ende des Rohrs (6), das sich an der Einlassöffnung (5) befindet, gepasst ist und ein Druckverbindungsstück (20') an ein zweites Ende des Rohrs (6), das sich an der Auslassöffnung (16) befindet, gepasst ist.

3. Mehrstufige Pumpe (1) nach einem der Ansprüche 1 oder 2, wobei das Basiselement (2) eine Basisschale (11) umfasst, die eine zylindrische Außenumfangswand des Basiselements (2) ausbildet.

4. Mehrstufige Pumpe (1) nach Anspruch 2 und optional Anspruch 3, wobei das Saugverbindungsstück (20) und das Druckverbindungsstück (20') jeweils starr mit dem Rohr (6) verbunden sind, insbesondere durch Schweißen.

5. Mehrstufige Pumpe (1) nach einem der Ansprüche 1 bis 4, wobei das Rohr (6) starr mit dem Basiselement (2), insbesondere mit der Basisschale (11), verbunden ist, insbesondere durch Expandieren und/oder Schweißen.

6. Mehrstufige Pumpe (1) nach einem der Ansprüche 1 bis 5, ferner umfassend ein inneres Rohr (9) zum Trennen von Fluid, das in die Pumpe (1) an der Einlassöffnung (5) eintritt, mit einem ersten Druck und Fluid, das aus der Pumpe (1) an der Auslassöffnung (16) abgelassen wird, mit einem zweiten Druck, wobei das innere Rohr (9) eine Anzahl von stapelbaren Rohrelementen (9', 9'', 9''', ...) umfasst.

7. Mehrstufige Pumpe (1) nach einem der Ansprüche 1 bis 6, wobei die Einlassöffnung (5) und die Auslassöffnung (16) auf gegenüberliegenden Seiten am Umfang des Basiselements (2) angeordnet sind.

8. Mehrstufige Pumpe (1) nach einem der Ansprüche 1 bis 7, wobei das Rohr (6), das die Einlassöffnung (5) und die Auslassöffnung (16) verbindet, ein gerades Rohr (6) mit vorzugsweise kreisförmigem Querschnitt ist.

9. Mehrstufige Pumpe (1) nach einem der Ansprüche 1 bis 8, wobei zumindest ein erstes Loch (7) im Rohr (6) ausgebildet ist, um einen Durchgang für das Fluid, das in die Pumpe (1) durch die Einlassöffnung (5) eintritt, zum Pumpenkörper (4) vorzusehen, insbesondere um mehrere Pumpenstufen (8, 8', 8'', 8''', ...) zu durchlaufen, die innerhalb des Pumpenkörpers (4) angeordnet sind.

10. Mehrstufige Pumpe (1) nach Anspruch 9, wobei zumindest ein zweites Loch (15) der Auslassöffnung (16) benachbart im Rohr (6) ausgebildet ist, um einen Durchgang vom inneren Rohr (9) zur Auslassöffnung (16) für das Fluid vorzusehen, das die zumindest eine Pumpenstufe (8, 8', 8'', 8''', ...) durchlaufen hat.

11. Mehrstufige Pumpe (1) nach einem der Ansprüche 1 bis 10, wobei ein scheibenförmiges Glied (17) mit im Wesentlichen demselben Durchmesser wie der Innendurchmesser des Rohrs (6) innerhalb des Rohrs (6) angeordnet ist, um das Fluid, das in die Pumpe (1) über die Einlassöffnung (5) eintritt, gegen das Fluid, das aus der Pumpe (1) über die Auslassöffnung (16) abgelassen wird, abzudichten.

12. Mehrstufige Pumpe (1) nach Anspruch 10 und 11, wobei das scheibenförmige Glied (17) zwischen dem ersten Loch (7) und dem zumindest einen zweiten Loch (15) des Rohrs (6) angeordnet ist.

13. Mehrstufige Pumpe (1) nach einem der Ansprüche 1 bis 12, wobei das Rohr (6) durch eine Saugkammer, insbesondere durch ihre Mitte, verläuft, welche innerhalb des Basiselements (2) verläuft.

14. Mehrstufige Pumpe (1) nach Anspruch 3 und optional einem der Ansprüche 4 bis 13, wobei das Rohr (6) durch einen ringförmigen Raum (30) verläuft, der zwischen dem inneren Rohr (9) und der Basisschale (11) ausgebildet ist.

15. Mehrstufige Pumpe (1) nach Anspruch 3 und optional einem der Ansprüche 4 bis 13, wobei die Basisschale (11) an ihrem oberen Ende mit einer zylindrischen Außenhülse (14) des Pumpenkörpers (4) verbunden ist.

## Revendications

1. Pompe à plusieurs étages (1) comprenant un corps (4), à une extrémité inférieure duquel est agencé un élément de base (2) et à une extrémité supérieure duquel est agencé un élément de tête (3), au moins l'élément de base (2) étant fait d'une feuille d'acier et ayant un port d'entrée (5) et un port de sortie (16) qui sont mécaniquement reliés l'un à l'autre par un porteur allongé (6) passant par l'élément de base (2), **caractérisé en ce que** le porteur allongé est un tuyau (6).

2. Pompe à plusieurs étages (1) selon la revendication 1, **caractérisé en ce qu'**une pièce de connexion à aspiration (20) est montée à une première extrémité du tuyau (6), située au port d'entrée (5), et une pièce de connexion à pression (20') est montée à une deuxième extrémité du tuyau (6), située au port de sortie (16).

3. Pompe à plusieurs étages (1) selon l'une des revendications 1 ou 2, **caractérisé en ce que** l'élément de base (2) comprend un support de base (11) qui forme une paroi circonférentielle extérieure cylindrique de l'élément de base (2).

4. Pompe à plusieurs étages (1) selon la revendication 2 et optionnel-lement selon la revendication 3, **caractérisé en ce que** la pièce de connexion à aspiration (20) et la pièce de connexion à pression (20') sont attachées chacune au tuyau (6) de façon fixe, notamment par soudage.

5. Pompe à plusieurs étages (1) selon l'une des revendications 1 à 4, **caractérisé en ce que** le tuyau (6) est attaché de façon fixe, notamment par expansion et/ou par soudage, à l'élément de base (2) notamment au support de base (11).

6. Pompe à plusieurs étages (1) selon l'une des revendications 1 à 5, comprenant en outre un tuyau intérieur (9) pour séparer du fluide entrant dans la pompe (1) au port d'entrée (5) avec une première pression, du fluide évacué de la pompe (1) au port de sortie (16) avec une deuxième pression, le tuyau intérieur (9) ayant un nombre d'éléments de tuyau (9', 9", 9'", ...) empilables.

7. Pompe à plusieurs étages (1) selon l'une des revendications 1 à 6, **caractérisé en ce que** le port d'entrée (5) et le port de sortie (16) sont disposés sur des côtés opposés sur la circonférence de l'élément de base (2).

8. Pompe à plusieurs étages (1) selon l'une des revendications 1 à 7, **caractérisé en ce que** le tuyau (6) reliant le port d'entrée (5) et le port de sortie (16) est un tuyau droit (6) avec, de préférence, une section transversale circulaire.

9. Pompe à plusieurs étages (1) selon l'une des revendications 1 à 8, **caractérisé en ce qu'**au moins un premier trou (7) est formé dans le tuyau (6) pour constituer un passage pour le fluide entrant dans la pompe (1) par le port d'entrée (5) vers le corps de pompe (4), notamment pour passer par une pluralité d'étages de pompe (8, 8', 8", 8'", ...) agencés dans le corps de pompe (4).

10. Pompe à plusieurs étages (1) selon la revendication 9, **caractérisé en ce qu'**au moins un deuxième trou (15) est formé dans le tuyau (6) adjacent au port de sortie (16) pour constituer un passage du tuyau intérieur (9) au port de sortie (16) pour le fluide qui est passé par ledit au moins un étage de pompe (8, 8', 8", 8"', ...).

11. Pompe à plusieurs étages (1) selon l'une des revendications 1 à 10, **caractérisé en ce qu'**un élément (17) en forme de disque ayant essentiellement le même diamètre que le diamètre intérieur du tuyau (6), est agencé à l'intérieur du tuyau (6) pour séparer le fluide entrant dans la pompe (1) par le port d'entrée (5) du fluide étant évacué de la pompe (1) par le port de sortie (16).

12. Pompe à plusieurs étages (1) selon les revendications 10 et 11, **caractérisé en ce que** l'élément (17) en forme de disque est agencé entre le premier trou (7) et ledit au moins un deuxième trou (15) du tuyau (6).

13. Pompe à plusieurs étages (1) selon l'une des revendications 1 à 12, **caractérisé en ce que** le tuyau (6) passe par une chambre d'aspiration, notamment par son centre, formée dans l'élément de base (2).

14. Pompe à plusieurs étages (1) selon la revendication 3 et optionnel-lement l'une des revendications 4 à 13, **caractérisé en ce que** le tuyau (6) passe par un espace annulaire (30) formé entre le tuyau intérieur (9) et le support de base (11).

15. Pompe à plusieurs étages (1) selon la revendication 3 et optionnel-lement l'une des revendications 4 à 13, **caractérisé en ce que** le support de base (11) est attachée à son extrémité supérieure à un manchon extérieur cylindrique (14) du corps de pompe (4).
